(19) **Europäisches Patentamt / European Patent Office / Office européen des brevets**

(11) **EP 2 476 015 B1**

(12) # FASCICULE DE BREVET EUROPEEN

(45) Date de publication et mention de la délivrance du brevet:
**31.10.2018 Bulletin 2018/44**

(51) Int Cl.:
**G01S 13/60** *(2006.01)*     **G01S 13/86** *(2006.01)*
**G01C 21/16** *(2006.01)*

(21) Numéro de dépôt: **10749663.0**

(22) Date de dépôt: **08.09.2010**

(86) Numéro de dépôt international:
**PCT/EP2010/063172**

(87) Numéro de publication internationale:
**WO 2011/029844 (17.03.2011 Gazette 2011/11)**

(54) **PROCÉDÉ DE DÉTERMINATION D'UNE VITESSE DE NAVIGATION D'UN PORTEUR ET DISPOSITIF D'HYBRIDATION**

VERFAHREN ZUR BESTIMMUNG DER NAVIGATIONSGESCHWINDIGKEIT EINES TRÄGERS UND HYBRIDISIERUNGSVORRICHTUNG

METHOD FOR DETERMINING THE NAVIGATION SPEED OF A CARRIER AND HYBRIDIZATION DEVICE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **08.09.2009 FR 0956106**

(43) Date de publication de la demande:
**18.07.2012 Bulletin 2012/29**

(73) Titulaire: **Safran Electronics & Defense
92100 Boulogne-Billancourt (FR)**

(72) Inventeur: **GAVILLET, Simon
F-75015 Paris (FR)**

(74) Mandataire: **Regimbeau
20, rue de Chazelles
75847 Paris Cedex 17 (FR)**

(56) Documents cités:
**EP-A1- 0 838 692    US-B1- 6 415 223**

- **BERNARD A KRIEGSMAN: "Radar-Updated Inertial Navigation of a Continuously-Powered Space Vehicle" IEEE TRANSACTIONS ON AEROSPACE AND ELECTRONIC SYSTEMS, IEEE SERVICE CENTER, PISCATAWAY, NJ, US, vol. AES-2, no. 4, 1 juillet 1966 (1966-07-01), pages 549-565, XP011211599 ISSN: 0018-9251**
- **VANDERSTOEP D R; CALL R W; WARZYNSKI R R: "A new approach to Doppler-inertial navigation (Doppler beam sampling)" 6TH ASILOMAR CONFERENCE ON CIRCUITS AND SYSTEMS - 15-17 NOV. 1972 - PACIFIC GROVE, CA, USA, 1973, - 1973 pages 267-275, XP008121957 USA ISSN: 1058-6393**

**Description**

DOMAINE TECHNIQUE GENERAL

Le domaine de l'invention est celui des porteurs utilisant des informations fournies à la fois par une centrale inertielle et par un radar Doppler.
Plus précisément, elle concerne un procédé de détermination d'une vitesse de navigation d'un porteur et un dispositif d'hybridation configuré pour implémenter le procédé.

ETAT DE L'ART

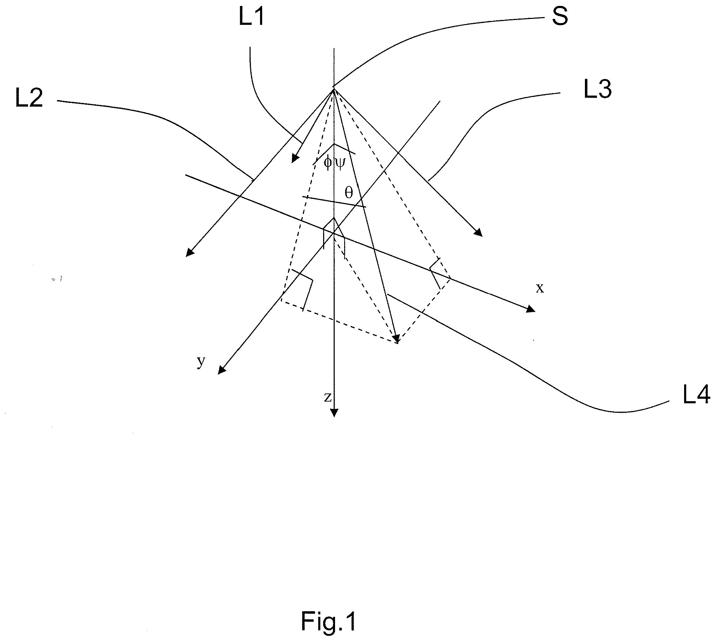

Les porteurs comme les aéronefs disposent de nombreux systèmes de navigation. Parmi ces systèmes, on compte notamment un équipement hybride INS/Radar Doppler (INS vient de l'anglo-saxon « Inertial Navigation System »).
Une centrale inertielle fournit des informations peu bruitées et précises à court terme. Cependant, sur le long terme, les performances en localisation d'une centrale inertielle se dégradent (plus ou moins vite en fonction de la qualité des capteurs, accéléromètres ou gyroscopes par exemple, et des traitements utilisés par la centrale). Un radar Doppler permet, de manière connue, de mesurer la vitesse du porteur. Le radar émet une onde en direction de la surface survolée, et l'onde réfléchie est détectée par une antenne. La différence de fréquence entre l'onde émise et l'onde de retour, réfléchie par la surface, permet de déduire la vitesse relative de déplacement du porteur par rapport à cette surface.
L'hybridation consiste à combiner les informations fournies par la centrale inertielle et les mesures fournies par le radar Doppler pour obtenir des informations de vitesse en tirant avantage des deux systèmes. Ainsi, la précision des mesures fournies par le radar Doppler permet de maîtriser la dérive inertielle.
Une telle hybridation est généralement réalisée au moyen d'un filtre de Kalman.
Pour déterminer un vecteur vitesse du porteur dans l'espace, le radar Doppler comporte deux antennes, l'une en transmission, l'autre en réception, chacune munie d'un nombre donné de lobes (généralement 4) selon une orientation propre.
On a représenté sur la figure 1 l'orientation des quatre lobes d'une antenne d'un radar Doppler. Un des lobes, référencé L4, est orienté par rapport à un repère lié au radar Doppler en fonction des angles $\phi, \theta$ et d'un sommet S sur l'axe vertical (axe Oz) du repère, identifié par un troisième angle $\psi$. Les trois autres faisceaux L1, L2, L3 sont symétriques de L4 respectivement par rapport à l'axe Oz, au plan yOz et au plan xOz. Les lobes L1, L2, L3 L4 de l'antenne en réception détectent ainsi chacun une onde de retour, dont on peut mesurer la fréquence F1, F2, F3, F4.
La relation entre les fréquences Doppler Fi, chacune correspondant à un lobe Li de l'antenne et la vitesse du porteur dans le repère d lié au radar Doppler - dont les axes sont représentés sur la figure 1 - s'écrit sous forme matricielle par le modèle physique suivant :

$$
\begin{pmatrix} F1 \\ F2 \\ F3 \\ F4 \end{pmatrix} = \frac{2F_t}{c} \begin{bmatrix} -\sin\theta & -\cos\theta\sin\phi & \cos\theta\cos\phi \\ -\sin\theta & \cos\theta\sin\phi & \cos\theta\cos\phi \\ \sin\theta & -\cos\theta\sin\phi & \cos\theta\cos\phi \\ \sin\theta & \cos\theta\sin\phi & \cos\theta\cos\phi \end{bmatrix} \cdot \begin{pmatrix} V_x \\ V_y \\ V_z \end{pmatrix} + \begin{pmatrix} \varepsilon1 \\ \varepsilon2 \\ \varepsilon3 \\ \varepsilon4 \end{pmatrix}
$$

où $V_x$, $V_y$ et $V_z$ représentent le vecteur vitesse V du porteur projeté sur les axes du repère, $F_t$ est la fréquence de l'onde émise et c est la vitesse de la lumière. Les $\varepsilon$ représentent les erreurs - indépendantes - liées aux mesures de fréquences Doppler.
Dans la suite, on notera K la matrice :

$$
\frac{2F_t}{c} \begin{bmatrix} -\sin\theta & -\cos\theta\sin\phi & \cos\theta\cos\phi \\ -\sin\theta & \cos\theta\sin\phi & \cos\theta\cos\phi \\ \sin\theta & -\cos\theta\sin\phi & \cos\theta\cos\phi \\ \sin\theta & \cos\theta\sin\phi & \cos\theta\cos\phi \end{bmatrix},
$$

l'équation précédente se réécrivant :

$$\begin{pmatrix} F1 \\ F2 \\ F3 \\ F4 \end{pmatrix} = K.\begin{pmatrix} V_x \\ V_y \\ V_z \end{pmatrix} + \begin{pmatrix} \varepsilon1 \\ \varepsilon2 \\ \varepsilon3 \\ \varepsilon4 \end{pmatrix} \qquad (1)$$

La vitesse est généralement élaborée à partir de trois mesures de fréquences. Classiquement, les mesures sont réalisées séquentiellement (toutes les 50 ms par exemple) et on considère alors les 3 mesures les plus récentes.

Par exemple, on peut déterminer le vecteur vitesse, à l'erreur près, par la relation :

$$\begin{pmatrix} V_x \\ V_y \\ V_z \end{pmatrix} = \frac{c}{2F_t} \begin{bmatrix} -\sin\theta & -\cos\theta\sin\phi & \cos\theta\cos\phi \\ -\sin\theta & \cos\theta\sin\phi & \cos\theta\cos\phi \\ \sin\theta & -\cos\theta\sin\phi & \cos\theta\cos\phi \end{bmatrix}^{-1} \begin{pmatrix} F1 \\ F2 \\ F3 \end{pmatrix}$$

Cette vitesse peut parfois être ensuite filtrée afin d'optimiser le compromis bruit et retard. L'erreur sur la vitesse ainsi déterminée provient donc d'un mélange entre les erreurs sur trois mesures de fréquences différentes. Il en résulte un modèle d'erreur complexe qui n'est pas optimisé pour être utilisé dans filtre de Kalman. Ceci limite les performances de l'hybridation par le filtre de Kalman.

En pratique, l'hybridation INS/Doppler peut être utilisée en soutien des hybridations classiques entre INS et système de navigation par satellite (GNSS), dans le cas où les mesures satellites ne sont plus disponibles. Cette hybridation est efficace au dessus d'une surface stable comme le sol terrestre, mais sa performance diminue au dessus d'une surface dynamique comme la mer et nécessite de devoir modéliser les phénomènes de courants marins. En effet, une erreur importante est alors associée à chaque mesure de fréquences. Cette erreur se retrouve dans le modèle d'erreur complexe de la vitesse déterminée par le radar Doppler, ce qui limite la précision de la vitesse corrigée par le filtre de Kalman via l'hybridation avec les données issues de la centrale inertielle.

L'article « Radar-Updated Inertial Navigation of a Continuously-Powered Space Vehicle" de Bernard A. Kriegsman (IEEE Transactions on Aerospace and Electronics System, IEEE Service Center, Piscataway, NJ, US, vol. AES-2, n°4, 1 juillet 1966 (1966-07-01), pages 549-565, XP011211599 ISSN:0018-9251) est représentatif de cet état de l'art selon lequel on réalise une hybridation à partir d'un écart d'estimation sur la vitesse. Cet article propose plus précisément de pondérer la différence entre la quantité mesurée par le radar Doppler (à savoir la vitesse du véhicule par rapport à la surface de la lune) et une estimation de cette vitesse extrapolée à partir de mesures inertielles.

Cet article ne propose donc en aucune manière d'utiliser directement les mesures de fréquence du radar Doppler pour s'hybrider à la centrale inertielle. En particulier, il ne propose pas d'utiliser la vitesse extrapolée à partir de mesures inertielles pour estimer des fréquences correspondant à chacune des fréquences Doppler délivrées par le radar. Et a fortiori, il ne propose pas de réaliser une hybridation à partir d'un écart d'estimation sur la fréquence Doppler associée à chacun des lobes du radar.

PRESENTATION DE L'INVENTION

L'invention a pour objectif d'améliorer la performance de l'hybridation INS/Doppler.

A cet effet, l'invention propose selon un premier aspect un procédé de détermination d'une vitesse de navigation d'un porteur selon la revendication 1.

Le procédé selon le premier aspect de l'invention est avantageusement complété par les caractéristiques suivantes, prises seules ou en une quelconque de leurs combinaisons techniquement possibles :

- le procédé comprend en outre une étape de pré-filtrage du groupe d'observations avant l'étape de calcul d'une correction de vitesse par le filtre de Kalman,
- le procédé comprend en outre une étape de calcul, par le filtre de Kalman, d'une correction de modèle à appliquer à un modèle physique reliant la vitesse estimée aux fréquences estimées,
- le radar délivre successivement les fréquences Doppler associées à chacun des lobes suivant une période de calcul, les observations du groupe d'observations étant alors déterminées au cours de cycles de calcul successifs.

L'invention propose selon un deuxième aspect un dispositif d'hybridation selon la revendication 6.

L'invention présente de nombreux avantages.

Les observations utilisées par le filtre de Kalman dans le cadre de l'invention présentent un modèle d'erreur plus simple que ceux de l'art antérieur ; les performances et la précision de l'hybridation sont améliorées.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente l'orientation des lobes d'une antenne réceptrice d'un radar Doppler
- la figure 2 représente, sous la forme d'un schéma bloc, un dispositif d'hybridation selon une réalisation possible du deuxième aspect de l'invention.

DESCRIPTION DETAILLEE

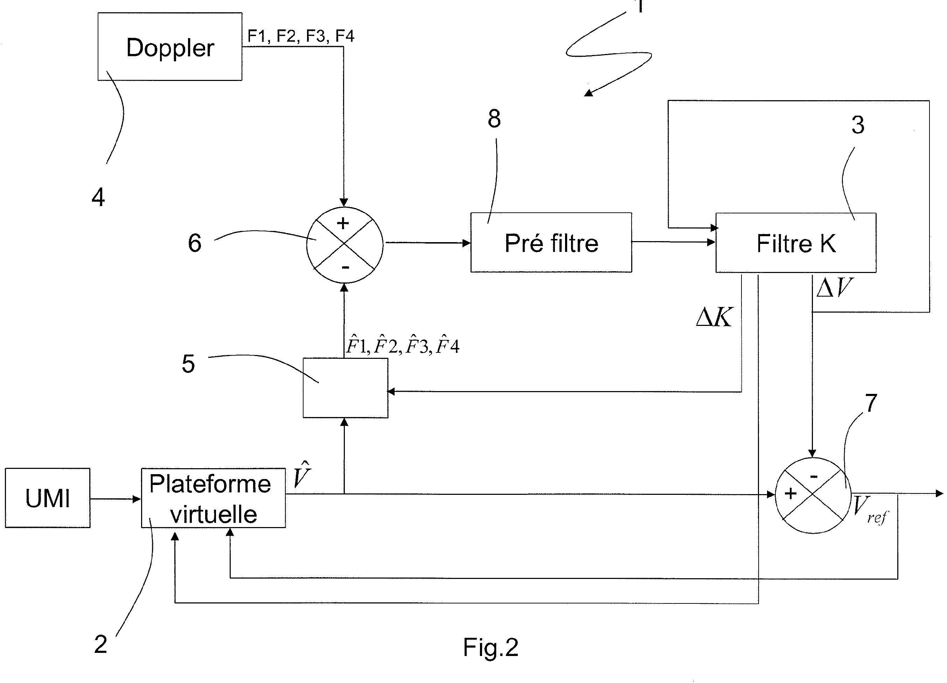

En référence à la figure 2, on a représenté un dispositif d'hybridation 1 conforme à un mode de réalisation possible du second aspect de l'invention, destiné à être embarqué au sein d'un porteur, comme par exemple un aéronef. Le dispositif d'hybridation 1 utilise des informations fournies par une centrale inertielle UMI et par un radar Doppler 4.
Une plateforme virtuelle 2 reçoit des incréments inertiels provenant des capteurs (gyroscopes, accéléromètres) de la centrale inertielle. Les incréments inertiels correspondent notamment à des incréments angulaires et à des incréments de vitesse. Des informations de navigation inertielle (comme les attitudes, la vitesse ou la position du porteur) sont calculées par la plateforme virtuelle 2 à partir de ces incréments. En particulier, la plateforme virtuelle 2 estime une vitesse $\hat{V}$ de navigation du porteur.
Le radar Doppler intègre une antenne multi-lobes, c'est-à-dire une antenne comprenant un nombre donné (supérieur à deux) de lobes. Préférentiellement, les lobes de l'antenne sont au nombre de quatre comme représenté sur la figure 1. Toutefois, l'invention n'est pas limitée à cette configuration, et se généralise à une antenne comprenant un nombre varié de lobes.
Le dispositif d'hybridation 1 reçoit du radar Doppler les fréquences F1, F2, F3, F4 associées à chacun des lobes de son antenne réceptrice. Ces fréquences seront désignées par « fréquences Doppler » dans la suite. Les fréquences Doppler peuvent être délivrées sous la forme d'une information numérique, ou analogique. Les fréquences Doppler sont calculées, par exemple, par un processeur du radar Doppler en fonction des ondes reçues par les lobes de l'antenne réceptrice du radar.
Avantageusement, le radar délivre successivement les fréquences Doppler F1, F2, F3, F4 associées à chacun des lobes suivant une période de calcul T. Par exemple, le radar délivre d'abord la fréquence F1, puis successivement, à intervalle de temps T, les fréquences F2, F3, et F4. A titre d'exemple numérique non limitatif, T peut valoir 0.05s.
Le dispositif d'hybridation comporte en outre un module 5 d'estimation configuré pour estimer, à partir de l'estimation de vitesse $\hat{V}$ fournie par la plateforme virtuelle 2, des fréquences $\hat{F}1,\hat{F}2,\hat{F}3,\hat{F}4$ correspondant à chacune des fréquences Doppler délivrées par le radar 2.
Ces fréquences sont estimées à partir d'un modèle physique reliant les fréquences Doppler à la vitesse :

$$\begin{pmatrix} \hat{F}1 \\ \hat{F}2 \\ \hat{F}3 \\ \hat{F}4 \end{pmatrix} = \hat{K}.\begin{pmatrix} \hat{V}_x \\ \hat{V}_y \\ \hat{V}_z \end{pmatrix} + \begin{pmatrix} \hat{\varepsilon}1 \\ \hat{\varepsilon}2 \\ \hat{\varepsilon}3 \\ \hat{\varepsilon}4 \end{pmatrix} \quad (2)$$

où $\hat{V}_x$, $\hat{V}_y$ et $\hat{V}_z$ sont les projetés du vecteur vitesse $\hat{V}$ estimé par la plateforme virtuelle 2 sur les axes du repère lié au radar Doppler, et $\hat{K}$ est initialisé à $\hat{K} = K$ et sera avantageusement corrigé au cours de l'hybridation comme on le verra plus loin. Les $\varepsilon$ sont des estimations de l'erreur associée aux mesures de fréquences Doppler. On pourra par exemple estimer ces erreurs comme des erreurs gaussiennes indépendantes.
Le dispositif d'hybridation 1 comporte en outre un filtre de Kalman 3 réalisant l'hybridation entre les informations inertielles provenant de la centrale inertielle et les informations du radar Doppler. Outre une fonction de fourniture d'informations statistiques sur les mesures en sortie, le rôle du filtre est de maintenir la plateforme virtuelle 2 dans un domaine de fonctionnement linéaire image de celui modélisé dans le filtre de Kalman 3 en estimant un vecteur d'états.
Le filtre de Kalman 3 prend en compte des groupes d'observations :

$$\begin{pmatrix} F1 - \hat{F}1 \\ F2 - \hat{F}2 \\ F3 - \hat{F}3 \\ F4 - \hat{F}4 \end{pmatrix}$$

obtenus au niveau d'un soustracteur 6 et élabore une solution de navigation hybride en vitesse.

Chacune de ces observations représente un écart sur l'estimation de la fréquence Doppler associée à un lobe. Les erreurs au premier ordre associée à ces observations sont respectivement :

$$\delta\varepsilon = \begin{pmatrix} \varepsilon1 - \hat{\varepsilon}1 \\ \varepsilon2 - \hat{\varepsilon}2 \\ \varepsilon3 - \hat{\varepsilon}3 \\ \varepsilon4 - \hat{\varepsilon}4 \end{pmatrix}$$

Dans le cadre de l'architecture en boucle fermée représentée sur la figure 1, le dispositif d'hybridation 1 élabore une sortie hybride Vref (« Vitesse de référence ») correspondant à la vitesse estimée par la plateforme virtuelle 2 et corrigées, via un soustracteur 7, par un vecteur d'état $\Delta V$ élaboré par le filtre de Kalman.

L'invention n'est toutefois pas limitée à une telle architecture, et s'étend en particulier à une architecture en boucle ouverte dans laquelle le soustracteur 7 n'est pas activé.

La sortie hybride Vref peut être rebouclée à l'entrée de la plateforme virtuelle 2. Par ailleurs, comme cela est représenté sur la figure 1, le vecteur d'état $\Delta V$ peut être appliqué à l'entrée du filtre de Kalman 3. De cette manière, le filtre est maintenu cohérent de la plateforme virtuelle 2.

Avantageusement, le groupe d'observations est pré-filtré au niveau d'un pré-filtre 8 du dispositif d'hybridation selon le deuxième aspect de l'invention. Le pré-filtrage peut comprendre, par exemple, une régression linéaire aux moindres carrés de l'ensemble des observations du groupe. Si nécessaire ce pré-filtrage permet de réduire le bruit sur les données en entrée du filtre de Kalman, pour une meilleure performance de l'hybridation.

Avantageusement encore, le filtre de Kalman calcule en outre une correction à appliquer au modèle d'erreur de la centrale inertielle

Avantageusement encore, le filtre de Kalman calcule en outre une correction $\Delta K$ à apporter au modèle physique du module 5 d'estimation. Cette correction revient à estimer les caractéristiques angulaires dans la géométrie des lobes de l'antenne. Les données d'initialisation de la matrice $\hat{K}$ peuvent être fournies par le constructeur du radar Doppler mais l'invention permet également de s'affranchir de la connaissance de ces données angulaires.

Ainsi, outre des performances accrues du filtre de Kalman, l'invention permet de corriger des erreurs de données constructeur sur la géométrie des lobes d'antenne réceptrice.

On va maintenant détailler une implémentation de calculs des estimées de fréquence en fonction de la vitesse estimée par la centrale inertielle selon une réalisation possible du premier aspect de l'invention.

Dans la suite, on définit les repères suivants :

- b : repère lié au porteur,
- d : repère lié au radar Doppler,
- v : repère vrai, c'est le repère d'un système inertiel parfait
- g : repère géographique local.

Les grandeurs seront indexées en fonction du repère dans lequel elles sont exprimées. Par ailleurs, on notera, pour tout couple de repères (x, y) $T_{x/y}$ la matrice de transition du repère x vers le repère y. On réécrit l'équation (1) de la manière suivante :

$$\begin{pmatrix} F1 \\ F2 \\ F3 \\ F4 \end{pmatrix} = K.V_d + \begin{pmatrix} \varepsilon1 \\ \varepsilon2 \\ \varepsilon3 \\ \varepsilon4 \end{pmatrix} = K.T_{d/b}.[T_{b/v}.V_v + \omega_b^{b/g} \wedge BL] + \begin{pmatrix} \varepsilon1 \\ \varepsilon2 \\ \varepsilon3 \\ \varepsilon4 \end{pmatrix},$$

où $\omega_b^{b/g}$ représente le vecteur rotation entre le repère b et le repère g exprimé dans le repère b, *BL* représente le bras de levier entre la centrale inertielle et le radar Doppler projeté dans le repère b, et $\wedge$ représente un produit vectoriel.

Par ailleurs, l'équation (2), mise en oeuvre par le module 5 pour estimer les fréquences Doppler à partir de la vitesse estimée par la centrale inertielle, peut être réécrite comme suit :

$$\begin{pmatrix} \hat{F}1 \\ \hat{F}2 \\ \hat{F}3 \\ \hat{F}4 \end{pmatrix} = \hat{K}.\hat{V}_v + \begin{pmatrix} \hat{\varepsilon}1 \\ \hat{\varepsilon}2 \\ \hat{\varepsilon}3 \\ \hat{\varepsilon}4 \end{pmatrix} = \hat{K}.T_{d/b}.[\hat{T}_{b/v}.\hat{V}_v + \omega_b^{b/g} \wedge BL] + \begin{pmatrix} \hat{\varepsilon}1 \\ \hat{\varepsilon}2 \\ \hat{\varepsilon}3 \\ \hat{\varepsilon}4 \end{pmatrix}$$

$$\delta\varepsilon = \begin{pmatrix} \varepsilon1 \\ \varepsilon2 \\ \varepsilon3 \\ \varepsilon4 \end{pmatrix} - \begin{pmatrix} \hat{\varepsilon}1 \\ \hat{\varepsilon}2 \\ \hat{\varepsilon}3 \\ \hat{\varepsilon}4 \end{pmatrix},$$

En notant $\delta K = K - \hat{K}$ et et $\delta T$ : matrice des erreurs d'attitude on obtient au premier ordre en entrée du filtre de Kalman :

$$\begin{pmatrix} F1 - \hat{F}1 \\ F2 - \hat{F}2 \\ F3 - \hat{F}3 \\ F4 - \hat{F}4 \end{pmatrix} = \hat{K}.T_{d/b}.[\hat{T}_{b/v}.(\delta T^T - I).\hat{V}_v + \hat{T}_{b/v}.(V_v - \hat{V}_v)] + \delta K.T_{d/b}.[\hat{T}_{b/v}.\hat{V}_v + \omega_b^{b/g} \wedge BL] + \delta\varepsilon$$

On ajoute alors aux vecteurs d'état du système $\delta K$ et $\delta\varepsilon$, qui représentent les erreurs du radar Doppler, et en particulier :

- les résidus d'erreurs angulaires dans la géométrie des lobes de l'antenne,
- les résidus d'anges de calage entre l'équipement de navigation inertielle et le radar Doppler,
- les résidus d'erreurs de calibration,

erreurs que l'hybridation selon l'invention permet de corriger par le filtre de Kalman.

## Revendications

1. Procédé de détermination d'une vitesse de navigation d'un porteur par un dispositif d'hybridation (1) comprenant un filtre de Kalman (3) élaborant une vitesse de navigation hybride ($V_{ref}$) à partir de mesures inertielles calculées par une plateforme virtuelle (2) estimant une vitesse du porteur ($\hat{V}$) et de mesures de fréquence délivrées par un radar Doppler (4) intégrant une antenne multi-lobes de sorte qu'une fréquence Doppler (F1, F2, F3, F4) est associée à chacun des lobes, **caractérisé en ce qu'**il comprend les étapes suivantes:

- estimation, à partir de la vitesse estimée ($\hat{V}$), de fréquences ($\hat{F}1,\hat{F}2,\hat{F}3,\hat{F}4$) correspondant à chacune des fréquences Doppler (F1, F2, F3, F4) délivrées par le radar,

- détermination d'un groupe d'observations où chaque observation représente un écart d'estimation sur la fréquence Doppler associée à un lobe, dans lequel chaque observation est déterminée par soustraction de la fréquence Doppler (F1, F2, F3, F4) associée au lobe délivrée par le radar Doppler et de la fréquence estimée ($\hat{F}1,\hat{F}2,\hat{F}3,\hat{F}4$) correspondant au lobe,

- calcul, par le filtre de Kalman (3), d'une correction de vitesse ($\Delta V$) à appliquer à la vitesse estimée ($\hat{V}$) en fonction du groupe d'observations.

2. Procédé selon l'une des revendications précédentes, comprenant en outre une étape de pré-filtrage du groupe d'observations avant l'étape de calcul d'une correction de vitesse par le filtre de Kalman (3).

3. Procédé selon l'une des revendications précédentes, comprenant en outre une étape de calcul, par le filtre de Kalman (3), d'une correction de modèle ($\Delta K$) à appliquer à un modèle physique reliant la vitesse estimée ($\hat{V}$) aux fréquences estimées ($\hat{F}1,\hat{F}2,\hat{F}3,\hat{F}4$).

4. Procédé selon l'une des revendications précédentes, comprenant en outre le calcul, par le filtre de Kalman (3), d'une correction à appliquer au modèle d'erreur de la centrale inertielle.

5. Procédé selon l'une des revendications précédentes, dans lequel le radar délivre successivement les fréquences Doppler (F1, F2, F3, F4) associées à chacun des lobes suivant une période de calcul (T), les observations du groupe d'observations étant alors déterminées au cours de cycles de calcul successifs.

6. Dispositif (1) d'hybridation comprenant une plateforme virtuelle (2) délivrant des mesures inertielles, un radar Doppler (4) intégrant une antenne multi-lobes et délivrant une fréquence Doppler (F1, F2, F3, F4) associé à chacun des lobes, **caractérisé en ce qu'**il comprend :

- un module (5) d'estimation configuré pour estimer, à partir d'une vitesse estimée ($\hat{V}$) par la plateforme virtuelle (2), des estimées de fréquence ($\hat{F}1,\hat{F}2,\hat{F}3,\hat{F}4$) correspondant à chacune des fréquences Doppler délivrées par le radar (2),

- un soustracteur (6) configuré pour déterminer un groupe d'observations, dans lequel chaque observation est déterminée par soustraction de la fréquence Doppler (F1, F2, F3, F4) associée au lobe délivrée par le radar Doppler et de la fréquence estimée ($\hat{F}1,\hat{F}2,\hat{F}3,\hat{F}4$) correspondant au lobe, et

- un filtre de Kalman (3) configuré pour calculer une correction de vitesse ($\Delta V$) à appliquer à la vitesse estimée ($\hat{V}$) par la plateforme virtuelle (2) en fonction du groupe d'observations.

**Patentansprüche**

1. Verfahren zum Bestimmen einer Navigationsgeschwindigkeit eines Trägers durch eine Hybridisierungsvorrichtung (1) einen Kalman-Filter (3) umfassend, der eine Hybrid-Navigationsgeschwindigkeit ($V_{ref}$) ausgehend von Trägheitsmessungen ausarbeitet, die durch eine virtuelle Plattform (2) berechnet werden, die eine Geschwindigkeit des Trägers ($\hat{V}$) schätzt, und von Frequenzmessungen, die durch einen Doppler-Radar (4) geliefert werden, der eine Antenne mit mehreren Keulen in der Art integriert, dass eine Dopplerfrequenz (F1, F2, F3, F4) jeder der Keulen zugeordnet ist, **dadurch gekennzeichnet, dass** es die folgenden Schritte umfasst:

- Schätzen, ausgehend von der geschätzten Geschwindigkeit ($\hat{V}$) von Frequenzen ($\hat{F}1,\hat{F}2,\hat{F}3,\hat{F}4$), die jeder der Dopplerfrequenzen (F1, F2, F3, F4) entsprechen, die durch den Radar geliefert werden,

- Bestimmen einer Gruppe von Beobachtungen, wo jede Beobachtung eine Schätzungsabweichung auf der Dopplerfrequenz darstellt, die einer Keule zugeordnet ist, wobei jede Beobachtung durch Subtrahieren der Dopplerfrequenz (F1, F2, F3, F4), die einer Keule zugeordnet ist, die durch den Doppler-Radar geliefert wird, und der geschätzten Frequenz ($\hat{F}1,\hat{F}2,\hat{F}3,\hat{F}4$) bestimmt wird, die der Keule entspricht,

- Berechnen durch den Kalman-Filter (3) einer Geschwindigkeitskorrektur ($\Delta V$), die in Abhängigkeit von der Gruppe von Beobachtungen auf die geschätzte Geschwindigkeit ($\hat{V}$) anzuwenden ist.

2. Verfahren nach einem der vorstehenden Ansprüche, weiter einen Vorfilterungsschritt der Gruppe von Beobachtungen vor dem Schritt des Berechnens einer Geschwindigkeitskorrektur durch den Kalman-Filter (3) umfassend.

**3.** Verfahren nach einem der vorstehenden Ansprüche, weiter einen Berechnungsschritt durch den Kalman-Filter (3) einer Modellkorrektur ($\Delta K$) umfassend, die auf ein physisches Modell anzuwenden ist, das die geschätzte Geschwindigkeit ($\hat{V}$) mit den geschätzten Frequenzen ($\hat{F}1,\hat{F}2,\hat{F}3,\hat{F}4$) verbindet.

**4.** Verfahren nach einem der vorstehenden Ansprüche, weiter die Berechnung durch den Kalman-Filter (3) einer Korrektur umfassend, die auf das Fehlermodell der Trägheitszentrale anzuwenden ist.

**5.** Verfahren nach einem der vorstehenden Ansprüche, wobei der Radar aufeinanderfolgend die Dopplerfrequenzen (F1, F2, F3, F4), die entsprechend einem Berechnungszeitraum (T) jeder der Keulen zugeordnet sind, liefert, wobei die Beobachtungen der Gruppe von Beobachtungen im Laufe von aufeinanderfolgenden Berechnungszyklen bestimmt werden.

**6.** Hybridisierungsvorrichtung (1), umfassend eine virtuelle Plattform (2), die Trägheitsmessungen liefert, einen Dopplerradar (4), der eine Antenne mit mehreren Keulen integriert und eine Dopplerfrequenz (F1, F2, F3, F4) liefert, die jeder der Keulen zugeordnet ist, **dadurch gekennzeichnet, dass** sie umfasst:

- ein Modul (5) zum Schätzen, konfiguriert, um ausgehend von einer durch die virtuelle Plattform (2) geschätzten Geschwindigkeit ($\hat{V}$) Frequenzschätzungen ($\hat{F}1,\hat{F}2,\hat{F}3,\hat{F}4$) zu schätzen, die jeder der Dopplerfrequenzen entsprechen, die durch den Radar (2) geliefert werden,
- einen Subtrahierer (6), konfiguriert, um eine Gruppe von Beobachtungen zu bestimmen, wobei jede Beobachtung durch Subtrahieren der Dopplerfrequenz (F1, F2, F3, F4), die einer Keule zugeordnet ist, die durch den Doppler-Radar geliefert wird, und der geschätzten Frequenz ($\hat{F}1,\hat{F}2,\hat{F}3,\hat{F}4$) bestimmt wird, die der Keule entspricht, und
- einen Kalman-Filter (3), konfiguriert, um eine Geschwindigkeitskorrektur ($\Delta V$) zu berechnen, die in Abhängigkeit von der Gruppe von Beobachtungen auf die durch die virtuelle Plattform (2) geschätzte Geschwindigkeit ($\hat{V}$) anzuwenden ist.

**Claims**

**1.** Method for determining a navigation speed of a carrier by a hybridization device (1) comprising a Kalman filter (3) developing a hybrid navigation speed ($V_{ref}$) from inertial measurements calculated by a virtual platform (2) estimating a speed of the carrier ($\hat{V}$) and frequency measurements outputted by a Doppler radar (4) having a multi-lobe antenna built therein such that a Doppler frequency (F1, F2, F3, F4) is associated with each of the lobes, **characterised in that** it comprises the following steps:

- estimation, from the estimated speed ($\hat{V}$), of frequencies ($\hat{F}1,\hat{F}2,\hat{F}3,\hat{F}4$) corresponding to each of the Doppler frequencies (F1, F2, F3, F4) outputted by the radar,
- determination of a group of observations where each observation represents an estimation deviation on the Doppler frequency associated with a lobe, in which each observation is determined by subtraction of the Doppler frequency (F1, F2, F3, F4) associated with the lobe outputted by the Doppler radar and the estimated frequency ($\hat{F}1,\hat{F}2,\hat{F}3,\hat{F}4$) corresponding to the lobe,
- calculation, by the Kalman filter (3), of a speed correction ($\Delta V$) to be applied to the estimated speed ($\hat{V}$) on the basis of the group of observations.

**2.** Method according to one of the preceding claims, moreover comprising a step of pre-filtering of the group of observations before the step of calculation of a speed correction by the Kalman filter (3).

**3.** Method according to either of the preceding claims, moreover including a step of calculation, by the Kalman filter (3), of a model correction ($\Delta K$) to be applied to a physical model linking the estimated speed ($\hat{V}$) to the estimated frequencies ($\hat{F}1,\hat{F}2,\hat{F}3,\hat{F}4$).

**4.** Method according to any of the preceding claims, moreover comprising the calculation, by the Kalman filter (3), of a correction to be applied to the error model of the inertial unit.

**5.** Method according to any of the preceding claims, in which the radar outputs successively the Doppler frequencies (F1, F2, F3, F4) associated with each of the lobes according to a calculation period (T), the observations of the group of observations then being determined during successive calculation cycles.

6. Hybridization device (1) comprising a virtual platform (2) outputting inertial measurements, a Doppler radar (4) having a multi-lobe antenna built therein and outputting a Doppler frequency (F1, F2, F3, F4) associated with each of the lobes, **characterised in that** it comprises:

- an estimation module (5) configured to estimate, from a speed ($\hat{V}$) estimated by the virtual platform (2), frequency estimations ($\hat{F}1, \hat{F}2, \hat{F}3, \hat{F}4$) corresponding to each of the Doppler frequencies outputted by the radar (2),
- a subtracter (6) configured to determine a group of observations, in which each observation is determined by subtraction of the Doppler frequency (F1, F2, F3, F4) associated with the lobe outputted by the Doppler radar and of the estimated frequency ($\hat{F}1, \hat{F}2, \hat{F}3, \hat{F}4$) corresponding to the lobe, and
- a Kalman filter (3) configured to calculate a speed correction ($\Delta V$) to be applied to the estimated speed ($\hat{V}$) by the virtual platform (2) as a function of the group of observations.

S

L3

L1

L2

L4

x

y

z

$\phi$ $\psi$

$\theta$

Fig.1

Fig.2

Filtre K

Pré filtre

Doppler

Plateforme virtuelle

UMI

F1, F2, F3, F4

$\hat{F}1, \hat{F}2, \hat{F}3, \hat{F}4$

$\Delta V$

$\Delta K$

$V_{ref}$

$\hat{V}$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Radar-Updated Inertial Navigation of a Continuously-Powered Space Vehicle. **BERNARD A. KRIEGSMAN.** IEEE Transactions on Aerospace and Electronics System. IEEE Service Center, 01 Juillet 1966, vol. AES-2, 549-565